# EUROPEAN PATENT APPLICATION

(11) **EP 4 840 758 A1**
(43) Date of publication of application: **18.11.2026**
(21) Application number: 26160690.9
(22) Date of filing: 25.02.2026
(51) Int. Cl.: B64D 1/06, B64D 7/08

(54) **WEAPON CARRYING DEVICE FOR MOUNTING A PAYLOAD IN A WEAPONS BAY OF AN AIRCRAFT, AIRCRAFT, AND METHOD FOR MOUNTING A PAYLOAD IN A WEAPONS BAY OF AN AIRCRAFT**

(30) Priority: 12.05.2025 DE 102025118067
(71) Applicant: Airbus Defence and Space GmbH, 82024 Taufkirchen (DE)
(72) Inventor: Cojocaru, Daniel-Christian, 82024 Taufkirchen (DE); Mayer, Florian, 82024 Taufkirchen (DE)
(74) Representative: Isarpatent

(57) **Abstract**

The present invention provides a weapon carrying device (10) for mounting a payload (2) in a weapons bay (3) of an aircraft (1), the weapon carrying device (10) comprising: a frame (11); and a multiplicity of mechanical connecting elements (13) for locking together with complementary anchoring means (4) of the aircraft, wherein the multiplicity of mechanical connecting elements (13) are attached to the frame (11) and are designed to secure the frame (11) to an inner side of a weapons bay (3) of an aircraft (1). Furthermore, the present invention provides an aircraft (1) having such a weapon carrying device (10), and a method (M) for mounting a payload (2) in a weapons bay (3) of an aircraft (1).

## Description

The present invention relates to a weapon carrying device for mounting a payload in a weapons bay of an aircraft. Furthermore, the present invention relates to an aircraft having such a weapon carrying device, and to a method for mounting a payload in a weapons bay of an aircraft.

The volume of a weapons bay in every aircraft is very limited. The weapons bay competes with other systems, for example avionics, landing gear, or fuel, for available space and has a direct influence on the performance of the aircraft, for example the range. The volume of the weapons bay is usually a compromise between the required weapons load and the capabilities of the aircraft. Geometrically optimized stacking of weapons in the weapons bay does not work since it does not provide the necessary accessibility. Weapon fitters require access to and visibility of the weapon release devices for locking and unlocking, for checking the device condition and, in the case of modern release devices, also access to a pressure connection. If all of these requirements are taken into consideration, the space requirement for weapons increases considerably.

A number of weapons systems which have devices for transporting and launching missiles or bombs are known from the prior art. For example, DE 10 2014 005 300 A1 describes a weapon carrier for attaching at least one unmanned missile to a carrier aircraft. This weapon carrier comprises mechanical aircraft adapter means, electric aircraft adapter means, at least one missile placement device for receiving the at least one unmanned missile, and at least one weapon control computer that is able to be connected to the at least one missile for data transmission.

A drawback is that known solutions accordingly provide a large amount of space in order to load the weapon in the weapons bay for example via a ground device/weapon loading device, similarly to weapon loading on the outer fuselage or on the wing. Alternatively, use is made of a strap which is connected to the launching unit and lowers the launching unit out of the weapons bay. Once the missile has been connected to the launching unit, the launching unit is moved upwards using the strap.

The present invention addresses the problem of providing an alternative weapon carrier which can be installed rapidly in a weapons bay, requires little space and affords ergonomic mounting.

According to the invention, this problem is solved respectively by the subjects of the independent claims.

According to a first aspect of the invention, a weapon carrying device for mounting a payload in a weapons bay of an aircraft is provided. The weapon carrying device comprises a frame and a multiplicity of mechanical connecting elements for locking together with complementary anchoring means of the aircraft. The multiplicity of mechanical connecting elements are attached to the frame and designed to secure the frame to an inner side of a weapons bay of an aircraft.

According to a second aspect of the invention, an aircraft is provided. The aircraft comprises a weapon carrying device according to the first aspect of the invention and a payload, which is received by the frame. Furthermore, the aircraft comprises a weapons bay having anchoring means, wherein the weapon carrying device is mounted on the anchoring means by the multiplicity of mechanical connecting elements.

According to a third aspect of the invention, a method for mounting a payload in a weapons bay of an aircraft is provided. The method comprises providing a weapon carrying device which has a frame and a multiplicity of mechanical connecting elements for locking together with complementary anchoring means of the aircraft. The multiplicity of mechanical connecting elements are attached to the frame. Furthermore, the method comprises attaching the payload to the frame. Moreover, the method comprises securing the frame and the payload coupled thereto beforehand to the aircraft using the multiplicity of mechanical connecting elements and the anchoring means of the aircraft.

An idea underlying the present invention consists in loading the payload on the weapon carrying device or on the weapon carrier outside the aircraft in order for it to be possible to load the payload without there being a large number of limitations with regard to accessibility. Once the weapon carrying device has been equipped with the payload, for example with at least one unmanned missile, in particular with one, two or four unmanned missiles, the weapon carrying device is moved to the aircraft and fastened in the weapons bay of the aircraft. The weapons bay may be arranged on an underside of the aircraft and have at least one hatch. The weapons bay may be dimensioned such that the weapon carrying device and the payload can be stowed therein and the hatch can close the weapons bay.

The payload may be at least one unmanned missile. Alternatively, the payload may be in the form of a carrying system which is intended to be attached to an underside of a fuselage or wing of the aircraft. Furthermore, the payload may be in the form of a fuel tank.

Furthermore, the weapon carrying device according to the invention and at least one unmanned missile transported thereby may form a weapon system. In particular, the weapon system consists of the weapon carrying device and two unmanned missiles attached thereto. The unmanned missile may be, for example, a ballistic rocket, a cruise missile, a guided missile, a buoy equipped with measurement technology or an unpowered air-to-ground weapon, in particular a bomb. The aircraft may be, for example, a fighter aircraft, a helicopter or a military wide-body aircraft.

The frame is a mechanical structural component which carries or receives the other components of the weapon carrying device.

Advantageously, a set-up time for mounting the payload, in particular the at least one unmanned missile, on the aircraft with the aid of the weapon carrying device according to the invention can be considerably reduced, since a weapon configuration can be prepared without the aircraft intended to be equipped therewith being present.

A further advantage of the weapon carrying device according to the invention is that the weapons bay of the aircraft can be provided with smaller dimensions. In addition, the weapon carrying device can provide the user with necessary accessibility or reachability while carrying out the method for mounting the unmanned missile within the the weapons bay.

Since the weapon carrying device can be mounted on and/or removed from the aircraft comparatively quickly and reliably, in particular compared with known arming processes, the aircraft can be armed with the engine running. The method according to the invention can meet NATO requirements for such an arming process.

As a result of the method according to the invention, injuries when working in confined spaces within the weapons bay can be reduced since the payload is pre-mounted on the weapon carrying device and is fastened as a pre-mounted assembly in the weapons bay.

Advantageous embodiments and developments will become apparent from the dependent claims that refer back to the independent claims and from the description with reference to the figures.

According to one embodiment of the invention, the weapon carrying device also comprises at least one missile launching unit, which is able to be arranged on an underside of the frame, wherein the at least one missile launching unit is designed to carry at least one unmanned missile as payload. The missile launching unit is able to be arranged on an underside of the frame, wherein the at least one missile launching unit is designed to transport at least one unmanned missile. Every missile launching unit can be adapted to the unmanned missile assigned to it. Thus, the unmanned missile and the associated missile launching unit can be adapted to an intended purpose. The at least one missile launching unit is attached to the frame by means of fastening means known to those skilled in the art. In addition, the time required for removing the missile launching unit can be considerably reduced in that the weapon carrying device is removed as an entire module.

According to one development of the invention, the at least one missile launching unit has an electric, a fuel-delivering and/or a pneumatic line which respectively comprises a free end designed to be connected to the aircraft, wherein the electric, the fuel-delivering and/or the pneumatic line is fastened to the frame in sections. In this way, predetermined paths along the frame can be provided for supply lines required for the missile launching unit. As a result, trapped lines can be avoided during mounting on the aircraft since the lines do not unintentionally pass into a contact region between the frame or the mechanical connecting elements and the aircraft.

A further end of the electric, the fuel-delivering and/or the pneumatic line is connected to the at least one missile launching unit. To fasten the line to the frame, at least one eyelet-like fastening element may be mountable on the frame.

According to a further development of the invention, the electric, the fuel-delivering and/or the pneumatic line is fastened to the frame in sections such that the respective free end is arranged in a region of its physical interface with the aircraft. Thus, the respective line can be connected to the aircraft, i.e. the respective supply connection established, along a short path.

For example, the frame can be assembled substantially from hollow profiles, wherein the hollow profiles are connected together by a material bond, in particular welded together. Furthermore, the frame can be produced from a light metal, for example aluminium, or alloys thereof. The frame can be as rigid as possible so that torsion of the frame is prevented. In this case, the frame can have a weight of about 20 kg or less, in particular in a range from about 10 kg to about 15 kg. A length of the frame can be, for example, between 1 m and 1.5 m. A width of the frame can be, for example, between 0.5 m and 1 m.

The multiplicity of mechanical connecting elements can be designed to secure the frame to the inner side of the weapons bay by being locked together in a force- and/or form-fitting manner with the complementary anchoring means of the aircraft. The force- and/or form-fitting locking can be formed, for example, by bolts or other screw elements. In this case, the mechanical connecting elements and the complementary anchoring means of the aircraft can each have at least one cutout through which the bolt or the other screw element can be passed, wherein the cutouts in the mechanical connecting element and in the complementary anchoring means of the aircraft are aligned with one another.

According to a further embodiment of the invention, the multiplicity of mechanical connecting elements are designed to toollessly secure the frame to the inner side of the weapons bay by being locked together with the complementary anchoring means of the aircraft with the aid of a snap-lock system. In this way, the set-up time can be reduced further since the frame is secured automatically to the aircraft. In particular, the multiplicity of mechanical connecting elements acting as a snap-lock system can be engaged with the anchoring means by pressing the frame against the aircraft. When the mechanical connecting elements are pressed into the anchoring means of the aircraft, the anchoring means can snap closed in a spring-loaded or electronically actuated manner and, as a result, clamp the mechanical connecting element in the anchoring means. For example, the multiplicity of mechanical connecting elements are attached to a top side, facing away from the underside, of the frame. The anchoring means can lock hydraulically, wherein a predetermined pressure force on the anchoring means causes them to snap closed. The snap-lock system may also be referred to, for example, as a so-called up-lock.

According to a further embodiment of the invention, the weapon carrying device also comprises at least one protruding element which is arranged on the top side and projects from the top side, wherein the at least one protruding element is formed and or designed to absorb forces in a longitudinal direction and/or a transverse direction with respect to the aircraft. In this way, forces on the multiplicity of mechanical connecting elements can be limited or reduced. In order that the forces arising in different directions do not cause any overloading on the multiplicity of mechanical connecting elements, the at least one protruding element can absorb at least a part of these forces in the transverse direction and/or in the longitudinal direction, which corresponds to the flight direction of the aircraft. Consequently, the mechanical connecting elements can be opened and closed again more reliably and thus be more durable. Excessive wearing or deformation of the mechanical connecting elements can be avoided as a result of the at least one protruding element. The at least one protruding element may, for example, be in the form of a peg, of a pin or the like.

According to a further embodiment of the invention, the weapon carrying device also comprises a support device which is arranged on the underside of the frame, wherein the support device has a form-fitting element which, by being brought into contact with a form-fitting counterpart of complementary design, forms a form fit in a longitudinal direction and/or a transverse direction of the frame. Thus, the weapon carrying device can be set down securely on a structure by way of the form-fitting counterpart of complementary design, without it being possible for the weapon carrying device to be shifted laterally with respect to the form-fitting counterpart of complementary design.

According to a further development of the invention, the weapon carrying device also comprises a mounting adapter for mounting the weapon carrying device on the aircraft, wherein the mounting adapter has an adapter connection, and wherein the mounting adapter is able to be coupled to a mobile lifting unit. In this way, the weapon carrying device can be lifted with the aid of the lifting unit, in order to move it into the weapons bay of the aircraft. The lifting unit may be in the form of a lift truck. The mounting adapter and the lifting unit may be able to be coupled together, in particular screwed together, in a force-fitting and/or form-fitting manner.

In some embodiments, the aircraft may have at least one unmanned missile as payload, which is received by the at least one missile launching unit.

According to a further embodiment of the invention, the weapon carrying device also has a support device, which is arranged on the underside of the frame, wherein, after the attachment of the payload, the frame is set down on a mounting adapter by way of the support device such that the mounting adapter can be lifted by means of a mobile lifting unit. In this way, the weapon carrying device can be lifted with the aid of the lifting unit, in order to move it into the weapons bay of the aircraft and to mount it there. The lifting unit and the mounting adapter may be designed as already described above.

In particular, at least one unmanned missile can be attached as payload to a missile launching unit. The missile launching unit is arranged, for example, on an underside, facing away from the top side, of the frame.

Optionally, before the frame is secured, an orientation of the weapon carrying device with respect to the anchoring means of the aircraft can be supported by means of a visual marking, wherein the visual marking is discernible to a user looking past the unmanned missile. In this way, in spite of the confined spatial conditions in the weapons bay of the aircraft and a consequently restricted view, the user can orient the weapon carrying device correctly and mount it securely on the aircraft.

According to a further embodiment of the invention, after the frame has been secured, a respective free end of an electric, a fuel-delivering and/or a pneumatic line is connected to corresponding interfaces of the aircraft. This means that, in a further work step, the supply connections can be established.

Where appropriate, the above embodiments and developments can be combined with one another as desired. In particular, all of the features of the device are transferable to the associated method, and vice versa. Further possible embodiments, developments and implementations of the invention also comprise combinations, which have not been specified explicitly, of features of the invention that are described above or in the following text with regard to the exemplary embodiments. In particular, a person skilled in the art will also add individual aspects as improvements or additions to the respective basic form of the present invention.

The present invention is explained in more detail in the following text on the basis of exemplary embodiments with reference to the accompanying figures of the drawings. In the figures:
- Fig. 1: shows a front view of an aircraft according to one exemplary embodiment of the invention;
- Fig. 2: shows a perspective view of a weapon carrying device for mounting a payload in a weapons bay of an aircraft according to a further exemplary embodiment of the invention;
- Fig. 3: shows a schematic view of an underside of the weapon carrying device from Fig. 2;
- Fig. 4: shows a schematic view of a lateral side of the weapon carrying device from Fig. 3;
- Fig. 5: shows a perspective view of a weapon carrying device for mounting a payload in a weapons bay of an aircraft according to a further exemplary embodiment of the invention;
- Fig. 6: shows a schematic view of an underside of the weapon carrying device from Fig. 5;
- Fig. 7: shows a schematic view of a lateral side of the weapon carrying device from Fig. 6;
- Fig. 8: shows a side view of a weapon carrying device, which is mounted in a weapons bay of an aircraft with the aid of a mounting adapter, according to a further exemplary embodiment of the invention;
- Fig. 9: shows a perspective view of a mounting adapter of the weapon carrying device from Fig. 8;
- Fig. 10: shows a schematic view of a top side of the mounting adapter from Fig. 9;
- Fig. 11: shows a schematic view of a lateral side of the mounting adapter from Fig. 9; and
- Fig. 12: shows a flow chart of a method for mounting a payload in a weapons bay of an aircraft according to a further exemplary embodiment of the invention.

In the figures of the drawing, elements, features and components that are the identical, functionally identically and act identically are - unless stated otherwise - respectively provided with the same reference signs.

Although specific embodiments and developments are illustrated and described herein, a person skilled in the art will prefer that a large number of alternative and/or equivalent embodiments can replace the specific exemplary embodiments that are illustrated and described, without departing from the scope of the present invention. This application is generally intended to cover all modifications of or changes to the specific exemplary embodiments described herein.

The accompanying figures are intended to convey further understanding of embodiments of the invention and serve, in conjunction with the description, to explain principles and concepts of the invention. Other exemplary embodiments and many of the stated advantages will become apparent with reference to the drawings. The drawings are to be understood only as being schematic drawings, and the elements of the drawings are not necessarily shown to scale relative to one another. Direction-indicating terminology such as "top", "bottom", "left", "right", "above", "below", "horizontal", "vertical", "front", "rear" and similar indications are used only for explanatory purposes and do not serve to restrict the generality to specific configurations as shown in the figures.

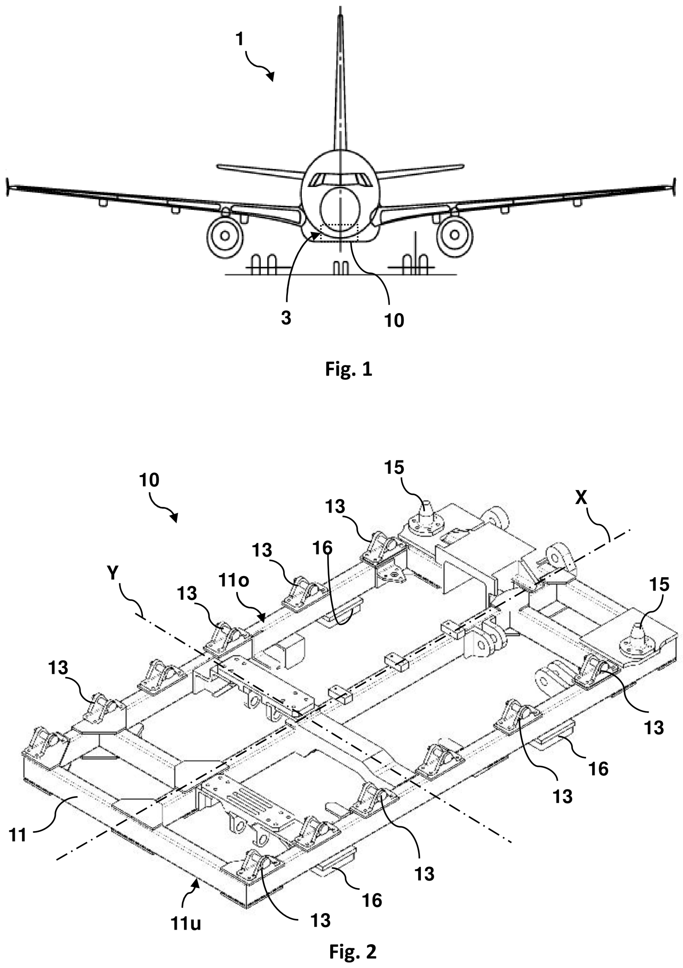

Fig. 1 shows a front view of an aircraft 1 according to one exemplary embodiment of the invention.

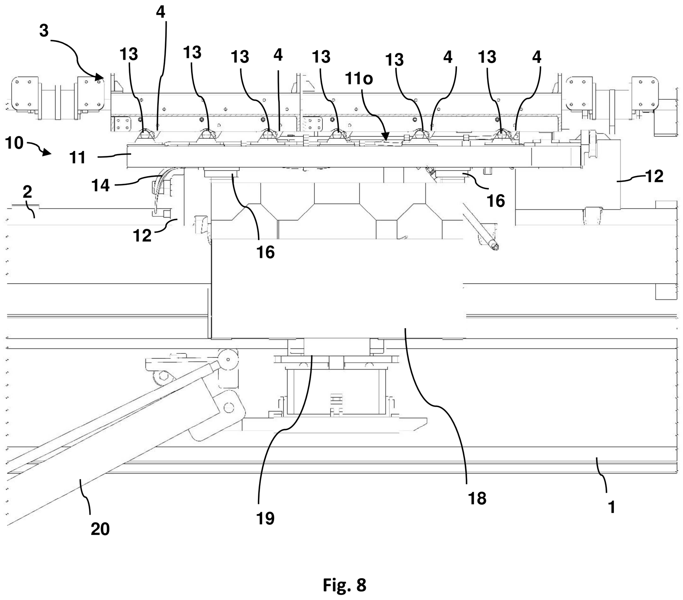

The aircraft 1 is in the form, for example, of a wide-body aircraft here, which is used by the military. The aircraft 1 comprises a weapons bay 3 having anchoring means (see Fig. 8, reference sign 4). Furthermore, the aircraft 1 comprises a weapon carrying device 10 for mounting a payload in the weapons bay 3 of the aircraft 1. The weapon carrying device 10 comprises a frame and a multiplicity of mechanical connecting elements for locking together with complementary anchoring means of the aircraft. In this case, the multiplicity of mechanical connecting elements are attached to the frame and designed to secure the frame to an inner side of the weapons bay 3. Furthermore, the weapon carrying device 10 is mounted on the anchoring means in the weapons bay 3 by the multiplicity of mechanical connecting elements.

Furthermore, the aircraft comprises a payload, which is received by the frame of the weapon carrying device 10. The payload may be at least one unmanned missile. Alternatively, the payload may be in the form of a carrying system which is intended to be attached to an underside of a fuselage or wing of the aircraft 1. Furthermore, the payload may be in the form of a fuel tank.

The weapons bay 3 may be arranged on an underside of the aircraft 1 and have at least one hatch. The weapons bay 3 may be dimensioned such that the weapon carrying device 10 and the payload can be stowed therein and the hatch can close the weapons bay 3.

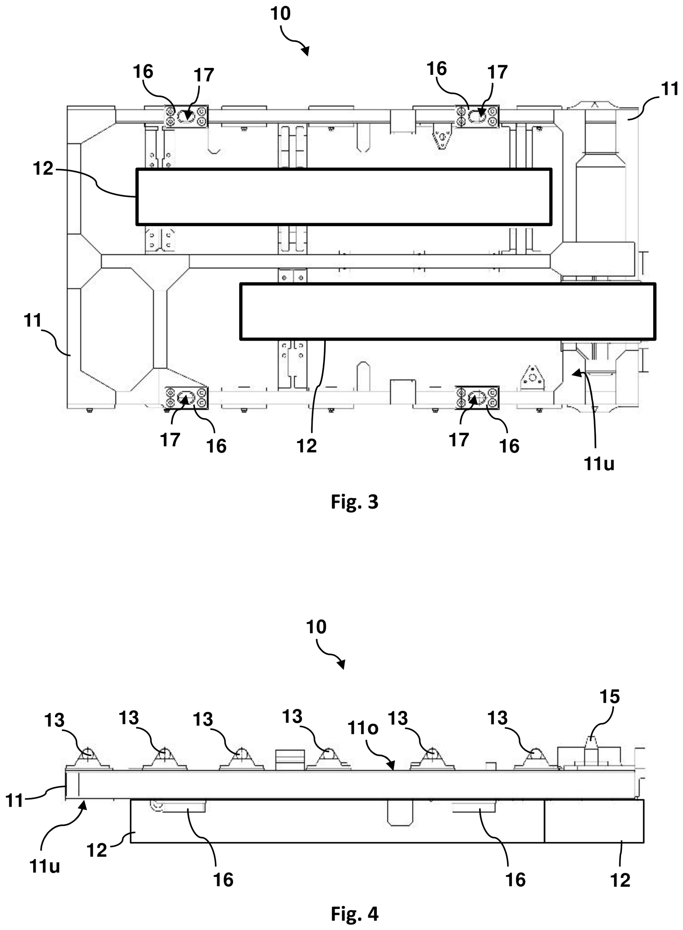

Fig. 2 shows a perspective view of a weapon carrying device 10 for mounting a payload in a weapons bay 3 of an aircraft 1 according to a further exemplary embodiment of the invention. Fig. 3 shows a schematic view of an underside 11u of the weapon carrying device 10 from Fig. 2. Fig. 4 shows a schematic view of a lateral side of the weapon carrying device 10 from Fig. 3.

The weapon carrying device 10 is specially designed for a weapons bay 3 of a fighter aircraft. The weapon carrying device 10 comprises a frame 11 and a multiplicity of mechanical connecting elements 13 for locking together with complementary anchoring means of the aircraft (see Fig. 8, reference sign 4).

The frame 11 is a mechanical structural component which carries or receives the other components of the weapon carrying device 10. For example, the frame 11 can be assembled substantially from hollow profiles, wherein the hollow profiles are connected together by a material bond, in particular welded together. Furthermore, the frame 11 can be produced from a light metal, for example aluminium, or alloys thereof. The frame 11 can be as rigid as possible so that torsion of the frame 11 is prevented. In this case, the frame 11 can have a weight of about 20 kg or less, in particular in a range from about 10 kg to about 15 kg. A length of the frame 11 can be, for example, between 1 m and 1.5 m. A width of the frame 11 can be, for example, between 0.5 m and 1 m.

The multiplicity of mechanical connecting elements 13 are attached to the frame 11 and designed to secure the frame 11 to an inner side of a weapons bay 3 of an aircraft 1, in particular of a fighter aircraft.

Furthermore, the weapon carrying device 10 in this case comprises, for example, two missile launching units 12, as is illustrated in Figures 3 and 4. The two missile launching units 12 are arranged on the underside 11u of the frame 11. The two missile launching units 12 are furthermore designed to each transport an unmanned missile (not illustrated), in particular a cruise missile or a guided missile. Every missile launching unit 12 can be adapted to the unmanned missile assigned to it. The two missile launching units 12 can be attached to the frame by means of fastening means known to those skilled in the art.

For example, the two missile launching units 12 may each have an electric and/or a pneumatic line (cf. Fig. 8, reference sign 14) which respectively comprises a free end designed to be connected to the aircraft 1, wherein the electric and/or the pneumatic line is fastened to the frame 11 in sections. A further end of the electric and/or pneumatic line is connected to the missile launching unit 12, as is illustrated in Fig. 8. To fasten the line to the frame 11, at least one eyelet-like fastening element may be mountable on the frame 11.

In particular, the electric and/or the pneumatic line is fastened to the frame 11 in sections such that the respective free end is arranged in a region of its physical interface with the aircraft 1.

The multiplicity of mechanical connecting elements 13 may be designed to toollessly secure the frame 11 to the inner side of the weapons bay 3 by being locked together with the complementary anchoring means of the aircraft with the aid of a snap-lock system. As a result, the frame 11 can be secured automatically to the aircraft. In particular, the multiplicity of mechanical connecting elements 13 acting as a snap-lock system can be engaged with the anchoring means by pressing the frame 11 against the aircraft 1. As is illustrated in Figures 2 and 4, the multiplicity of mechanical connecting elements 13 can be attached to a top side 11o, facing away from the underside 11u, of the frame 11.

Optionally, the weapon carrying device 10 can have at least one protruding element 15, which is arranged on the top side 11o and projects from the top side 11o. In Fig. 2, two protruding elements 15 are provided by way of example. The two protruding elements 15 are formed and designed to absorb forces in a longitudinal direction X and/or a transverse direction Y with respect to the aircraft 1. The longitudinal direction X corresponds to the flight direction of the aircraft 1. For example, the two protruding elements 15 are each in the form of a pin.

In Fig. 3, an example of a support device 16 is illustrated. The support device 16 is arranged on the underside 11u of the frame 11, wherein the support device 16 has a form-fitting element 17. The form-fitting element 17, by being brought into contact with a form-fitting counterpart of complementary design, can form a form fit in the longitudinal direction X and/or the transverse direction Y of the frame 11. In this case, the support device comprises, for example, four insertion sleeves 16, which each have a cutout as form-fitting element 17. Thus, the weapon carrying device 10 can be set down securely on a structure by way of the form-fitting counterpart of complementary design, without it being possible for the weapon carrying device 10 to be shifted laterally with respect to the form-fitting counterpart of complementary design.

It is conceivable to use this weapon carrying device 10 in particular in military aircraft. In principle, however, the weapon carrying device 10 can be used in any type of aircraft that has a bay in the fuselage or in the wings, for example in order to carry an additional fuel tank.

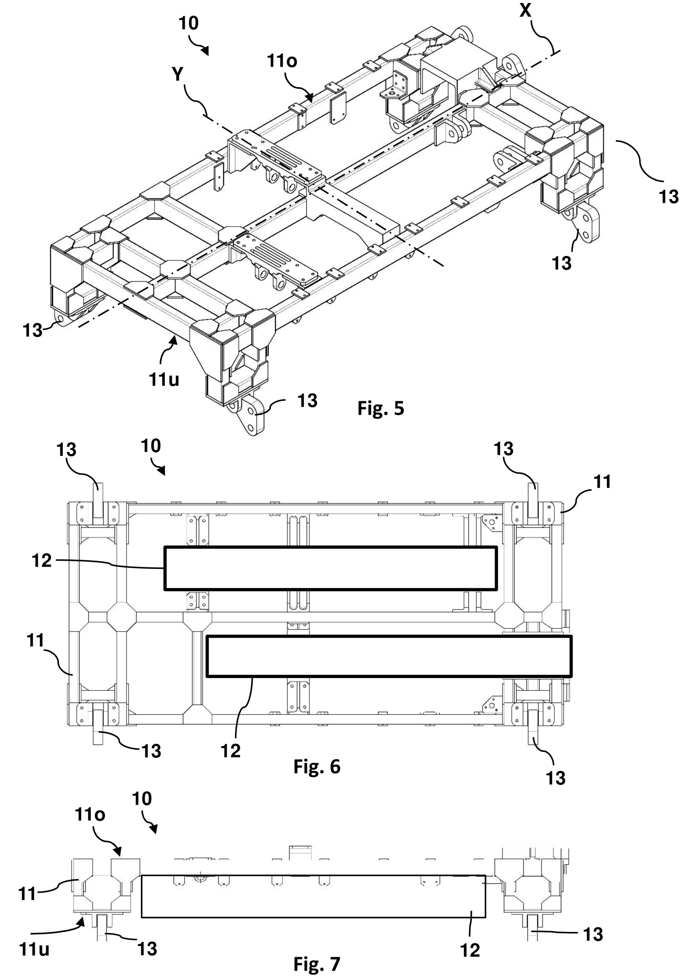

Fig. 5 shows a perspective view of a weapon carrying device for mounting a payload in a weapons bay of an aircraft according to a further exemplary embodiment of the invention. Fig. 6 shows a schematic view of an underside of the weapon carrying device from Fig. 5. Fig. 7 shows a schematic view of a lateral side of the weapon carrying device from Fig. 6.

The weapon carrying device 10 in this case comprises a frame 11 and a multiplicity of mechanical connecting elements 13 for locking together with complementary anchoring means of the aircraft (see Fig. 8, reference sign 4).

The frame 11 is a mechanical structural component which carries or receives the other components of the weapon carrying device 10. For example, the frame 11 can be assembled substantially from hollow profiles, wherein the hollow profiles are connected together by a material bond, in particular welded together. Furthermore, the frame 11 can be produced from a light metal, for example aluminium, or alloys thereof. The frame 11 can be as rigid as possible so that torsion of the frame 11 is prevented. In this case, the frame 11 can have a weight of about 20 kg or less, in particular in a range from about 10 kg to about 15 kg. A length of the frame 11 can be, for example, between 1 m and 1.5 m. A width of the frame 11 can be, for example, between 0.5 m and 1 m.

The multiplicity of mechanical connecting elements 13 are attached to the frame 11 and designed to secure the frame 11 to an inner side of a weapons bay 3 of an aircraft 1. The multiplicity of mechanical connecting elements 13 can be designed to secure the frame 11 to the inner side of the weapons bay 3 by being locked together in a force- and/or form-fitting manner with the complementary anchoring means of the aircraft. The force- and/or form-fitting locking can be formed, for example, by bolts or other screw elements. As is illustrated in Figures 5 and 7, the multiplicity of mechanical connecting elements 13 can be attached to or arranged on a lateral side of the frame 11.

Furthermore, the weapon carrying device 10 in this case comprises, for example, two missile launching units 12, as is illustrated in Figures 6 and 7. The two missile launching units 12 are arranged on the underside 11u of the frame 11. The two missile launching units 12 are furthermore designed to each transport an unmanned missile (not illustrated), in particular a cruise missile or a guided missile. Every missile launching unit 12 can be adapted to the unmanned missile assigned to it. The two missile launching units 12 can be attached to the frame by means of fastening means known to those skilled in the art.

For example, the two missile launching units 12 may each have an electric and/or a pneumatic line (cf. Fig. 8, reference sign 14) which respectively comprises a free end designed to be connected to the aircraft 1, wherein the electric and/or the pneumatic line is fastened to the frame 11 in sections. A further end of the electric and/or pneumatic line is connected to the missile launching unit 12, as is illustrated in Fig. 8. To fasten the line to the frame 11, at least one eyelet-like fastening element may be mountable on the frame 11.

In particular, the electric and/or the pneumatic line is fastened to the frame 11 in sections such that the respective free end is arranged in a region of its physical interface with the aircraft 1.

In this case, the two missile launching units 12 are oriented, for example, along a longitudinal direction X of the weapon carrying device 10. The longitudinal direction X corresponds to the flight direction of the aircraft 1.

Fig. 8 shows a side view of a weapon carrying device 10, which is mounted in a weapons bay 3 of an aircraft 1 with the aid of a mounting adapter 18, according to a further exemplary embodiment of the invention.

The weapon carrying device 10 according to Fig. 8 comprises substantially the same features as the weapon carrying device 10 from Figs. 2, 3 and 4, unless described otherwise below.

In the illustrated state, as is depicted in Fig. 8, the weapon carrying device 10 has been lifted into the weapons bay 3 of the aircraft 1 by the mounting adapter 18 and oriented, such that the multiplicity of mechanical connecting elements 13 can be engaged with the complementary anchoring means 4 of the aircraft 1, that is to say locked together therewith.

The mounting adapter 18 is designed for mounting the weapon carrying device 10 on the aircraft 1. In addition, the mounting adapter 18 has an adapter connection 19. Thus, the weapon carrying device 10 can be manoeuvred reliably with a mobile lifting unit 20. In this way, the weapon carrying device 10 can be lifted with the aid of the lifting unit 20, in order to move it into the weapons bay 3 on an underside of the aircraft 1. The lifting unit 20 may be in the form of a lift truck. The mounting adapter 18 and the lifting unit 20 may be able to be coupled together, in particular screwed together, in a force-fitting and/or form-fitting manner. In this case, the mounting adapter 18 is formed such that the payload 2 is not touched while the weapon carrying device 10 is being lifted.

Here, the aircraft 1 has, for example, a hatch that can close the weapons bay 3 and is accordingly open during the mounting the weapon carrying device 10. In Fig. 8, the hatch is downwardly open.

Furthermore, the supply lines 14 are coupled at one end to the at least one missile launching unit 12 and additionally fastened to the frame 11 in sections.

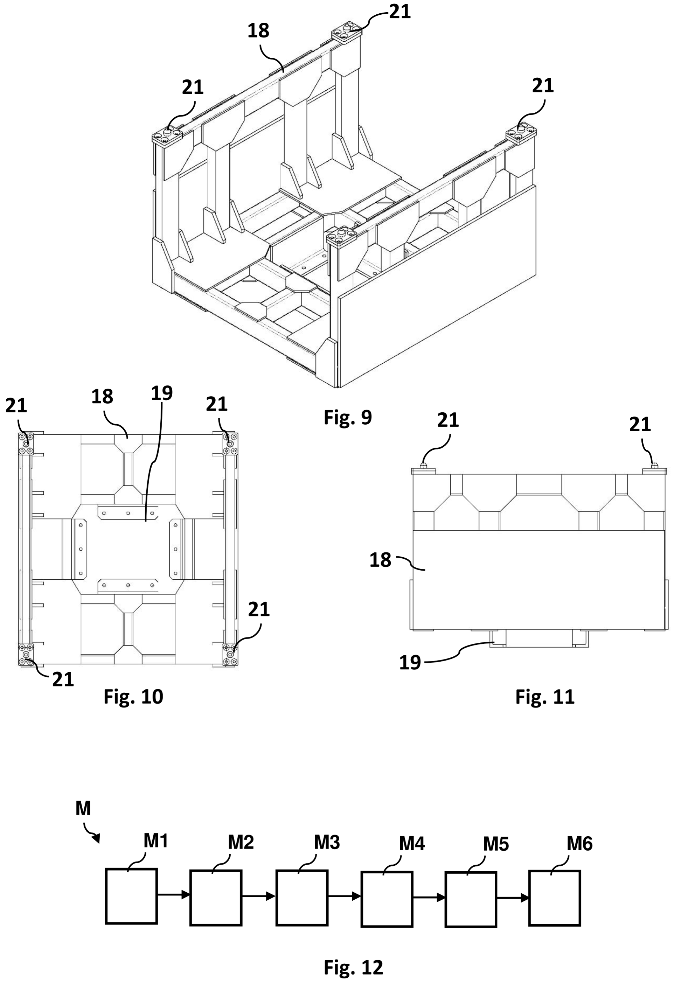

Fig. 9 shows a perspective view of a mounting adapter 18 of the weapon carrying device 10 from Fig. 8. Fig. 10 shows a schematic view of a top side of the mounting adapter 18 from Fig. 9. Fig. 11 shows a schematic view of a lateral side of the mounting adapter 18 from Fig. 9.

The mounting adapter 18 has, for example, a cuboidal basic shape. In a front view, the mounting adapter 18 may have a horseshoe-like shape, such that clearance is provided for the payload along one axis in order that the payload can extend beyond the dimensions of the mounting adapter 18 along this axis. The mounting adapter 18 may be assembled from a plurality of structural profiles.

An underside of the mounting adapter 18 may have an adapter connection 19. A top side, facing away from the underside, of the mounting adapter 18 may have the form-fitting counterpart 21 for the form fit with the form-fitting element 16 (see Fig. 3).

Fig. 12 shows a flow chart of a method M for mounting a payload 2 in a weapons bay 3 of an aircraft 1 according to a further exemplary embodiment of the invention.

The method M comprises the steps of providing M1 a weapon carrying device 10, attaching M2 the payload 2, setting down M3, orienting M4 the weapon carrying device 10, securing M5 a frame 11, and connecting M6 an electric, a fuel-delivering and/or a pneumatic line 14.

In the step M1, a weapon carrying device 10 is provided, which has the frame 11 and a multiplicity of mechanical connecting elements 13 for locking together with complementary anchoring means 4 of the aircraft. The multiplicity of mechanical connecting elements 13 are attached to the frame 11. The weapon carrying device 10 may be designed, for example, according to an exemplary embodiment according to Figs. 2-4 or 5-7. In particular, the weapon carrying device 10 may have a support device 16, which is arranged on an underside 11u of the frame 11.

In the step M2, the payload 2 is attached to the frame 11.

In the optional step M3, after the attachment M2 of the payload 2, the frame 11 is set down on a mounting adapter 18 by way of the support device 16 such that the mounting adapter 18 can be lifted by means of a lifting unit 20.

In the optional step M4, before the frame 11 is secured M5, an orientation of the weapon carrying device 10 with respect to the anchoring means 4 of the aircraft is supported by means of a visual marking, wherein the visual marking is discernible to a user looking past the payload 2. In this way, in spite of the confined spatial conditions in the weapons bay 3 of the aircraft 1 and a consequently restricted view, the user can orient the weapon carrying device 10 correctly and mount it securely on the aircraft 1.

In the step M5, the frame 11 and the payload 2 coupled thereto beforehand are secured to the aircraft 1 using the multiplicity of mechanical connecting elements 13 and the anchoring means 4 of the aircraft. This means that the payload 2 is pre-mounted on the weapon support device 10 and the pre-mounted system formed in this way is fastened to the aircraft 1.

In the optional step M6, after the frame 11 has been secured M5, a respective free end of an electric, a fuel-delivering and/or a pneumatic line 14 is connected to corresponding interfaces of the aircraft 1. This means that, in a final work step, the supply connections 14 can be established.

The above-described method steps can be carried out preferably in the order in which they are mentioned or numbered, but are not restricted to this order.

In the detailed description above, in order to improve the rigour of the illustration, various features have been combined in one or more examples. However, it should be clear that the above description is only of an illustrative and in no way restrictive nature. It is used to cover all alternatives, modifications and equivalents of the various features and exemplary embodiments. Many other examples will be immediately and directly clear to a person skilled in the art on the basis of their technical knowledge in view of the above description.

The exemplary embodiments were chosen and described in order for it to be possible to represent the principles on which the invention is based and their possible uses in practice in the best possible manner. As a result, those skilled in the art can modify and use the invention and its various exemplary embodiments optimally for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

### List of reference signs

- 1: Aircraft
- 2: Unmanned missile
- 3: Weapons bay of the aircraft
- 4: Anchoring means
- 10: Weapon carrying device
- 11: Frame
- 12: Missile launching unit
- 13: Mechanical connecting means
- 14: Supply line (electric, fuel-delivering and/or pneumatic)
- 15: Protruding element
- 16: Support device
- 17: Form-fitting element
- 18: Mounting adapter
- 19: Adapter connection
- 20: Mobile lifting unit
- 21: Form-fitting counterpart

- X: Longitudinal direction
- Y: Transverse direction

- M: Method
- M1: Providing
- M2: Attaching
- M3: Setting down
- M4: Orienting
- M5: Securing
- M6: Connecting

## Claims

1. Weapon carrying device (10) for mounting a payload (2) in a weapons bay (3) of an aircraft (1), the weapon carrying device (10) comprising:
a frame (11); and
a multiplicity of mechanical connecting elements (13) for locking together with complementary anchoring means (4) of the aircraft, wherein the multiplicity of mechanical connecting elements (13) are attached to the frame (11) and are designed to secure the frame (11) to an inner side of a weapons bay (3) of an aircraft (1).

2. Weapon carrying device (10) according to Claim 1, also comprising at least one missile launching unit (12), which is able to be arranged on an underside (11u) of the frame (11), wherein the at least one missile launching unit (12) is designed to carry at least one unmanned missile as payload (2).

3. Weapon carrying device (10) according to Claim 2, wherein the at least one missile launching unit (12) has an electric, a fuel-delivering and/or a pneumatic line (14) which respectively comprises a free end designed to be connected to the aircraft (1), wherein the electric, the fuel-delivering and/or the pneumatic line (14) is fastened to the frame (11) in sections.

4. Weapon carrying device (10) according to Claim 3, wherein the electric, the fuel-delivering and/or the pneumatic line (14) is fastened to the frame (11) in sections such that the respective free end is arranged in a region of its physical interface with the aircraft (1).

5. Weapon carrying device (10) according to any of the preceding claims, wherein the multiplicity of mechanical connecting elements (13) are designed to toollessly secure the frame (11) to the inner side of the weapons bay (3) by being locked together with the complementary anchoring means (4) of the aircraft with the aid of a snap-lock system.

6. Weapon carrying device (10) according to any of the preceding claims, also comprising at least one protruding element (15) which is arranged on a top side (11o) facing away from the underside (11u) and projects from the top side (11o), wherein the at least one protruding element (15) is formed and or designed to absorb forces in a longitudinal direction (X) and/or a transverse direction (Y) with respect to the aircraft (1).

7. Weapon carrying device (10) according to any of the preceding claims, also comprising a support device (16) which is arranged on the underside (11u) of the frame (11), wherein the support device (16) has a form-fitting element (17) which, by being brought into contact with a form-fitting counterpart (21) of complementary design, forms a form fit in a longitudinal direction (X) and/or a transverse direction (Y) of the frame (11).

8. Weapon carrying device (10) according to Claim 7, also comprising a mounting adapter (18) for mounting the weapon carrying device (10) on the aircraft (1), wherein the mounting adapter (18) has an adapter connection (19), and wherein the mounting adapter (18) is able to be coupled to a mobile lifting unit (20).

9. Aircraft (1) comprising:
a weapon carrying device (10) according to any of the preceding claims;
a payload (2), which is received by the frame (11); and
a weapons bay (3) having anchoring means (4), wherein the weapon carrying device (10) is mounted on the anchoring means (4) by the multiplicity of mechanical connecting elements (13).

10. Method (M) for mounting a payload (2) in a weapons bay (3) of an aircraft (1), the method (M) comprising:
providing (M1) a weapon carrying device (10) which has a frame (11) and a multiplicity of mechanical connecting elements (13) for locking together with complementary anchoring means (4) of the aircraft, wherein the multiplicity of mechanical connecting elements (13) are attached to the frame (11);
attaching (M2) the payload (2) to the frame (11);
securing (M5) the frame (11) and the payload (2) coupled thereto beforehand to the aircraft (1) using the multiplicity of mechanical connecting elements (13) and the anchoring means (4) of the aircraft.

11. Method (M) according to Claim 10, wherein the weapon carrying device (10) also has a support device (16), which is arranged on an underside (11u) of the frame (11), wherein, after the attachment (M2) of the payload (2), the frame (11) is set down (M3) on a mounting adapter (18) by way of the support device (16) such that the mounting adapter (18) can be lifted by means of a mobile lifting unit (20).

12. Method (M) according to Claim 10 or 11, wherein, after the frame (11) has been secured (M5), a respective free end of an electric, a fuel-delivering and/or a pneumatic line (14) is connected (M6) to corresponding interfaces of the aircraft (1).
